(19) Europäisches Patentamt
European Patent Office
Office européen des brevets

(11) **EP 1 191 349 A2**

(12) **EUROPÄISCHE PATENTANMELDUNG**

(43) Veröffentlichungstag:
**27.03.2002 Patentblatt 2002/13**

(51) Int Cl.⁷: **G01S 13/02**

(21) Anmeldenummer: **01120395.7**

(22) Anmeldetag: **25.08.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **23.09.2000 DE 10047195**

(71) Anmelder: **ROBERT BOSCH GMBH**
**70442 Stuttgart (DE)**

(72) Erfinder:
• **Hoetzel, Juergen**
 **61197 Florstadt (DE)**
• **Knoblauch, Marco**
 **75417 Muehlacker (DE)**
• **Richter, Karl-Heinz**
 **71263 Weil der Stadt (DE)**

(54) **Radarsensor**

(57) Es wird ein Radarsensor vorgeschlagen, der auf dem Puls-Echo-Verfahren basiert und einen Schalter aufweist, der Sendesignale zu bestimmten Zeitpunkten abschaltet. Diese Zeitpunkte werden durch ein Schaltsignal des Prozessors bestimmt. Mit dem Verzögerungselement werden Pulse für einen Mischer im Empfangspfad des Radarsensors verzögert, um anhand der Verzögerungszeit die Entfernung zwischen Radarsensor und Hindernis zu bestimmen. Der erfindungsgemäße Schalter verhindert ein Überkoppeln vom Sendepfad in den Empfangspfad und damit eine Erzeugung von Geisterhindernissen.

Fig. 1

**Beschreibung**

Stand der Technik

Die Erfindung geht aus von einem Radarsensor nach der Gattung des unabhängigen Patentanspruchs.

Es sind bereits Radarsensoren auf der Basis von Pulsechoverfahren bekannt. Bei einem Pulsechoverfahren wird ein kurzer Wellenzug, der Puls, ausgesendet. Aus der Laufzeit des Pulses von dem Sender zu dem Hindernis und wieder zurück wird der Abstand vom Radarsensor zu dem Hindernis berechnet.

Der Radarsensor weist einen Oszillator auf, mit dem die Hochfrequenzsignale erzeugt werden, die einerseits zum Senden verwendet werden und andererseits zum Mischen, um die empfangenen Hochfrequenzsignale in eine Zwischenfrequenz umzusetzen. Weiterhin weist der Radarsensor einen Koppler auf, der die Hochfrequenzsignale des Oszillators in den Empfangspfad und den Sendepfad koppelt. Ein Pulsgenerator dient zur Erzeugung der Pulse, mit denen Schalter geschlossen werden, über die dann die Hochfrequenzsignale geleitet werden. Ein weiteres Element ist das Verzögerungselement, das die Pulse, die zu dem Schalter führen, der im Empfangspfad liegt, gehen. Das Verzögerungselement wird durch eine Spannungsrampe angesteuert. Je nach dem aktuellen Wert der Spannungsrampe wird ein Puls im Verzögerungselement verzögert. Damit werden die Pulse in Abhängigkeit von der Spannungsrampe verzögert, so dass für unterschiedliche Verzögerungszeiten, die unterschiedlichen Radarsensor-Hindernis-Abständen entsprechen, unterschiedlich verzögerte Pulse erzeugt werden, die den Schalter für die Hochfrequenzsignale, die zum Mischer führen, schließen. Ein Prozessor steuert den Radarsensor und ist vorzugsweise als Mikrocontroller ausgebildet.

Vorteile der Erfindung

Der erfindungsgemäße Radarsensor mit den Merkmalen des unabhängigen Patentanspruchs hat demgegenüber den Vorteil, dass durch ein gezieltes Abschalten der Pulse im Sendepfad des Radarsensors Hochfrequenzsignale nur zu solchen Zeitpunkten der Spannungsrampe gesendet werden, die zu eindeutigen Meßergebnissen und damit Abstandsmessungen führen. Damit werden vorteilhafter Weise ein Übersprechen und ein Aufschwingen durch Geistersignale im Empfangspfad verhindert. Auch während des Zurückspringens der Spannungsrampe von ihrem Maximalwert auf ihren Minimalwert werden keine Pulse ausgesendet, so dass es dann zu keinen Messungen kommt. Damit wird vorteilhafter Weise der minimale Messabstand verkürzt und ein größerer Gesamtmessbereich erzielt. Dies ist insbesondere für die Anwendung des Radarsensors als eine Parkhilfe vorteilhaft.

Durch die in den abhängigen Ansprüchen aufgeführten Maßnahmen und Weiterbildungen sind vorteilhafte Verbesserungen des im unabhängigen Patentanspruch angegebenen Radarsensors möglich.

Es ist weiterhin von Vorteil, dass der Radarsensor entweder mit einer Antenne sowohl für das Senden und den Empfang ausgestattet ist, was eine Aufwandserleichterung ist, oder mit zwei Antennen jeweils für das Senden und Empfangen ausgestattet ist, so dass ein geringes Übersprechen von dem Sende- in den Empfangspfad möglich ist.

Zeichnung

Ausführungsbeispiele der Erfindung sind in der Zeichnung dargestellt und werden in der nachfolgenden Beschreibung näher erläutert. Es zeigt Figur 1 ein Blockschaltbild des erfindungsgemäßen Radarsensors, Figur 2 eine Spannungsrampe im Spannungszeitdiagramm, Figur 3 das Blockschaltbild des Verzögerungselements und Figur 4 den Signalverlauf der Spannungsrampe im Vergleich zum Steuersignal des Schalters und der den Schalter passierenden Impulse.

Beschreibung

Radarsensoren finden in der Kraftfahrzeugtechnik ein großes Anwendungsgebiet. Insbesondere für Einparkhilfen und Abstandskontrollen werden Radarsensoren vorteilhafter Weise verwendet. Erfindungsgemäß wird für einen Radarsensor, der auf Basis eines Puls-Echo-Verfahrens arbeitet, eine Messbereichserweiterung durch ein gezieltes Abschalten von Pulsen im Sendepfad erreicht. Diese Pulse schalten selbst einen Schalter, über den Hochfrequenzsignale geleitet werden, die von dem Radarsensor abgestrahlt werden.

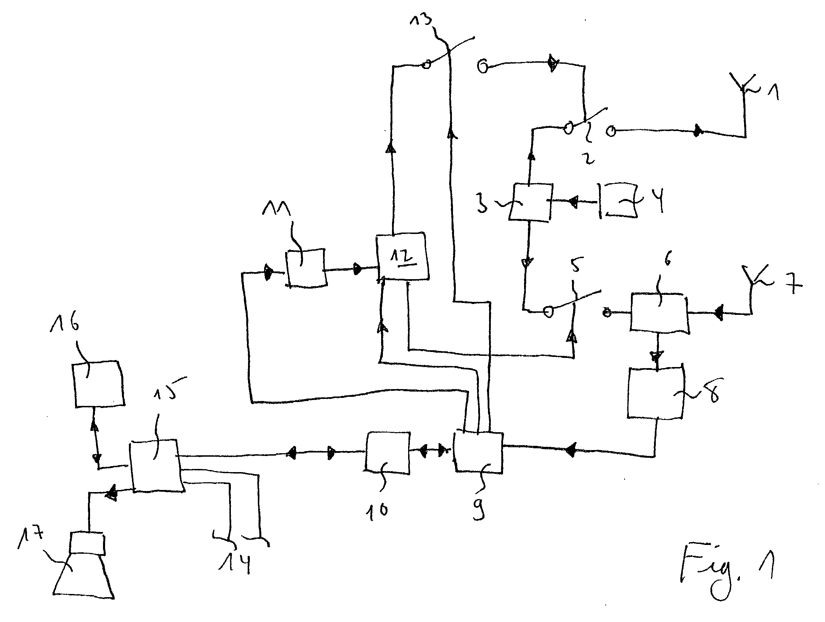

In Figur 1 ist das Blockschaltbild des erfindungsgemäßen Radarsensors dargestellt. Eine Antenne 1 ist an einen Schalter 2 angeschlossen. Auf der anderen Seite des Schalters 2 ist ein erster Ausgang eines Kopplers 3 angeschlossen. Der Steuereingang des Schalters 2 ist mit einem Schalter 13 verbunden. Ein Eingang des Kopplers 3 ist mit einem Oszillator 4 verbunden. Ein zweiter Ausgang des Kopplers 3 führt zu einem Schalter 5. Auf der anderen Seite des Schalters 5 ist der Schalter 5 an einen ersten Eingang eines Mischers 6 angeschlossen. An einen zweiten Eingang des Mischers 6 ist eine Antenne 7 angeschlossen. An einen Ausgang des Mischers 6 ist ein Verstärker 8 angeschlossen. An einen Ausgang des Verstärkers 8 ist ein Prozessor 9 angeschlossen, der aus einem Mikrokontroller oder einem Signalprozessor bestehen kann. An einen ersten Ausgang des Prozessors 9 ist eine Interface-Schaltung 10 angeschlossen. Über die Interface-Schaltung 10 ist der Sensor mit einem Steuergerät 15 verbunden. Das Steuergerät 15 kann mit weiteren Radarsensoren 14 verbunden sein. Mit weiteren Ausgängen des Steuergeräts 15 sind ein Lautsprecher 17 und eine Anzeige 16 verbunden.

Das Verzögerungselement 12 besitzt einen Impulseingang, einen analogen Steuereingang und zwei Impulsausgänge. Der erste Impulsausgang liefert ein Referenzsignal und der zweite ein verzögertes Signal. Die Verzögerung ist als Zeitdifferenz zwischen dem ersten und zweiten Impulsausgangssignal definiert. An einen ersten Eingang des Verzögerungselements 12 ist ein Spannungsrampengenerator 11 angeschlossen. Der Referenzausgang des Verzögerungselements 12 ist mit dem Schalter 13 verbunden. An einen Steuereingang des Schalters 13 ist ein erster Datenausgang eines Prozessors 9 angeschlossen. Ein zweiter Datenausgang des Prozessors 9 führt zu dem Verzögerungselement 12. Ein dritter Datenausgang des Prozessors 16 führt zu dem Spannungsrampengenerator 11.

Die Schalter 2, 5 und 13 werden über ihre Steuereingänge geschaltet. Die Schalter 2 und 5 sind spezielle HF-Schalter auf der Basis von Schottky-Dioden. Schalter 13 ist ein Logikgatter. Der Oszillator 4 erzeugt Hochfrequenzsignale im Dauer-Betrieb bei einer Wellenlänge im Millimeterbereich. Die Frequenz wird dabei von einem dielektrischen Resonator bestimmt. Als der Koppler 3 wird vorzugsweise ein 90°-Hybridkoppler verwendet, der durch eine entsprechende Dimensionierung der Zweige eine unsymmetrische Aufteilung der Oszillatorleistung gestattet. Damit kann eine optimale Mischerleistung eingestellt werden. In Sonderfällen kann ein kompensiertes T-Stück verwendet werden.

Für den Mischer 6 wird eine Nichtlinearität benötigt, die durch eine Schottkydiode oder einen Transistor realisiert wird. Der Verstärker 8 bereitet das Mischersignal für die digitale Weiterverarbeitung vor. Der Prozessor 9 führt eine Signalverarbeitung durch und liefert Abstandswerte für die Weiterverarbeitung in einem Steuergerät 15. Das Steuergerät 15 steuert in Abhängigkeit von den Abstandsdaten die Anzeige 16 und den Lautsprecher 17 an, um beispielsweise bei Unterschreiten eines zulässigen Mindestabstandes einen Warnton mittels des Lautsprechers 17 abzugeben. Das Steuergerät 15 weist hierzu einen Audio-Verstärker auf. Alternativ ist es auch möglich, dass eine Warnung in Worten mittels des Lautsprechers 17 übermittelt wird. Auf der Anzeige 16 können die Abstände, die mittels des erfindungsgemäßen Radarsensors bestimmt werden, angezeigt werden. Dazu kann vorteilhafter Weise die Anzeige eines Navigationssystems oder eines Autoradios verwendet werden. Dazu ist das Steuergerät beispielsweise an einen Multi-Media-Bus in einem Fahrzeug anzuschließen, um die Übertragung zu der Anzeige zu ermöglichen.

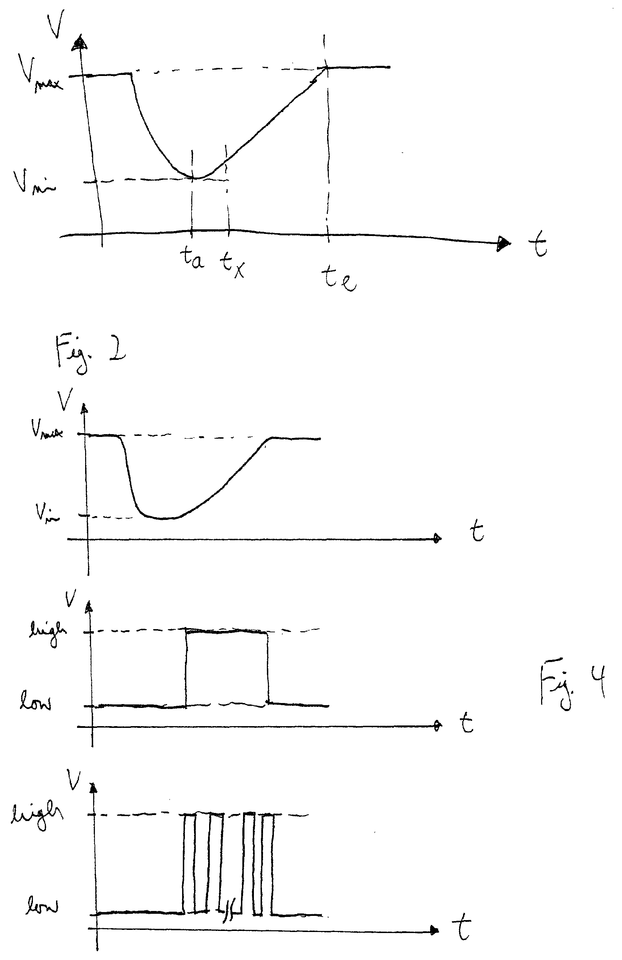

In Figur 2 ist eine Spannungsrampe, die für die Verzögerung verwendet wird, dargestellt. Die Spannungsrampe beginnt bei der Zeit $t_a$ und geht bis zur Zeit $t_e$. Dabei durchläuft die Spannungsrampe die Werte von $V_{min}$ bis $V_{max}$. Die Spannungsamplitude der Spannungsrampe bestimmt, wie lange ein Puls verzögert wird. Dadurch wird eine Serie von Pulsen unterschiedlich verzögert, so dass mit diesen unterschiedlich verzögerten Pulsen jeweils unterschiedliche Abstände gemessen werden können. Der Mischer 6 liefert nur dann ein von Null verschiedenes Ausgangssignal, wenn ein mit der Antenne 7 empfangener Puls zeitlich mit einem der verzögerten Puls zusammenfällt. Anhand der Verzögerungszeit ist der Abstand zwischen Radarsensor und Hindernis leicht bestimmbar. Der Prozessor 9 verwendet daher das verstärkte Ausgangssignal des Mischers 6 und die dazu gehörige Verzögerungszeit zur Bestimmung des Abstandes.

Die Spannungsrampe springt, nachdem sie den Wert $V_{max}$ erreicht hat wieder auf den Wert $V_{min}$ zurück, wie es vor der Rampe in Figur 2 dargestellt ist. Bei dem Zurückspringen durchläuft die Spannung erneut alle Werte von $V_{max}$ bis $V_{min}$ In diesem Bereich sollen jedoch keine Messungen stattfinden. Daher wird während des Zurückspringens der Schalter 13 geöffnet, so dass keine Sendesignale zu diesen Zeiten versendet werden. Weiterhin öffnet der Prozessor 9 den Schalter 13 für die Zeiten $t_a$ bis $t_x$. $t_x$ gibt an, ab welcher minimalen Entfernung der Radarsensor mißt. Dies ist notwendig, da zu den Anfangszeiten von $t_a$ bis $t_x$ eine Überkopplung von dem Sendepfad in den Empfangspfad, also von der Antenne 1 zu der Antenne 7 möglich ist. Liegt nur eine Antenne für Senden und Empfangen vor, dann ist die Überkopplung noch wahrscheinlicher. Der Prozessor 9 steuert den Spannungsrampengenerator 11 und das Verzögerungselement 12 und den Schalter 13, so dass eine Synchronisierung ermöglicht wird.

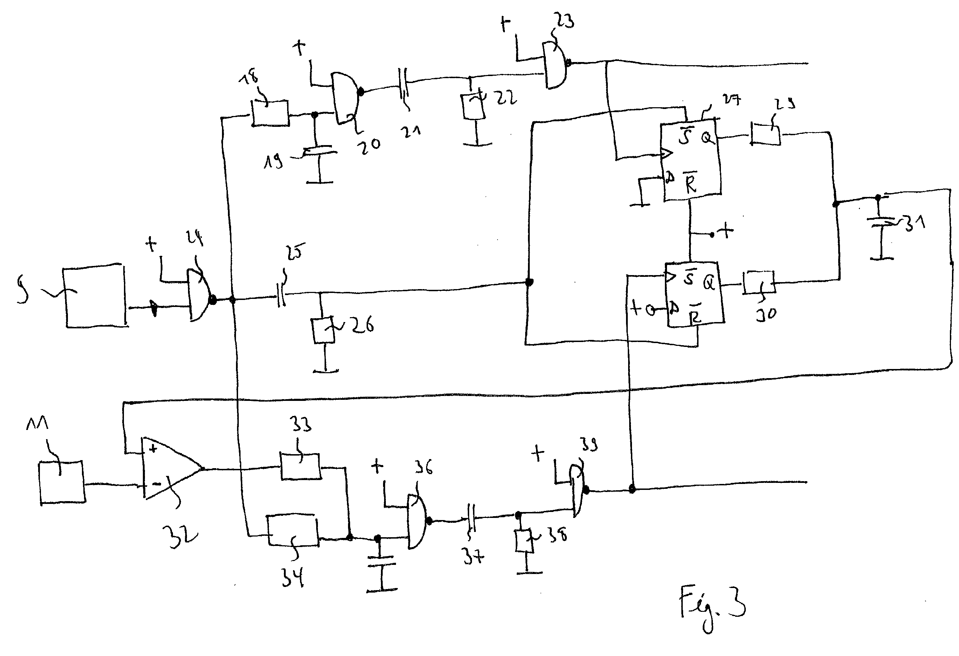

In Figur 3 ist das Verzögerungselement 12 im Detail dargestellt. Ein erster Datenausgang des Prozessors 9 führt zu einem NAND-Gatter 24, das als Treiber arbeitet. Der Ausgang des Spannungsrampengenerators 11 führt zu dem invertierenden Eingang eines Operationsverstärkers 32. Der Ausgang des Treibers 24 wird auf 3 Zweige aufgeteilt. Die RC-Glieder 18, 19 und 34, 35 formen aus dem rechteckförmigen Ausgangssignal des Treibers 24 ein exponentiell an- bzw. abfallendes Signal. Die Gatter 20 und 36 dienen als Schwellwertschalter, die ihr Ausgangssignal ändern, wenn die Schwelle über- oder unterschritten wird. Über den Widerstand 33 wird eine Spannung von dem Operationsverstärker 32 dem exponentiell geformten Signal überlagert. Durch diese Überlagerung wird der Schaltzeitpunkt des Gatters 36 verschoben. Die Verschiebung des Zeitpunktes stellt die Verzögerung des Verzögerungselementes dar. Nach den Schwellwertschaltern 23 und 39 folgt ein Differenzierglied 21, 22 bzw. 37, 38. Damit wird mittels der Gatter 23 und 39 eine bestimmte Impulsbreite der Ausgangsimpulse erzeugt. Die Stabilität der Verzögerungszeit mit den RC-Gliedern und den Schwellwertgattern unterliegt starken Exemplar- und Temperaturschwankungen. Deshalb wird die Schaltung in einer Regelschleife betrieben. Sie wird gebildet durch die Flip-Flops 27 und 28, dem Tiefpass 29, 30 und 31 und dem Verstärker 32.

Die high-low-Flanke der Wellenform am Ausgang des Treibers 24 setzt Flip-Flop 27 und rücksetzt Flip-Flop 28. Gleichzeitig tritt an den Eingängen der Schwellwertschaltern 20 und 36 der exponentielle Verlauf auf. Nach Unterschreiten der Schwelle, zuerst bei Gatter 20 und danach bei Gatter 36 entsteht an deren Ausgängen ein low-high Übergang. An den Ausgängen der Gatter 23 und 39 tritt ein high-low-high Impuls auf. Die Rückflanke dieses Impulses setzt Flip-Flop 27 zurück und setzt Flip-Flop 28. Die Ausgangsimpulse der Flip-Flops werden mit den Widerständen 29 und 30 summiert. Weil die Flip-flops komplementär schalten, ergibt sich als Mittelwert der Spannung an Kondensator 31 ein Wert, der proportional zur Differenz der Einschaltzeiten der Flip-Flops ist. Ist die Verzögerungszeit gleich Null, dann ist die Spannung gleich der halben Betriebsspannung. Ist die Verzögerung positiv, dann ist die Spannung kleiner als die halbe Betriebsspannung. Der Zusammenhang von Verzögerung und Spannung an 31 lautet:

$$U_D(t_D) = 0{,}5 \cdot U_B \cdot (1 - t_D \cdot PRF)$$

Mit $U_D$: Spannung an 31, $t_D$: Verzögerungszeit, $U_B$: Versorgungsspannung, PRF: Wiederholfrequenz der Impulse.

Die Spannung an 31 hängt damit linear von der Verzögerungszeit ab, und es gehen nur die Betriebsspannung und die Wiederholfrequenz mit in das Ergebnis ein. Der Verstärker 32 vergleicht das Signal von Kondensator 31 mit der Spannung des Rampengenerators 11 und liefert an seinem Ausgang ein Regelsignal, das über den Widerstand 33 die Spannung an dem RC-Glied 34, 35 so beeinflusst, dass sich die gewünschte Verzögerungszeit einstellt. Mit dieser Methode wird eine sehr hohe Stabilität der Zeitverzögerung mit geringem Aufwand erreicht.

In Figur 4 sind noch einmal die Signalverläufe der Spannungsrampe des Signals vom Prozessor 9 auf den Schalter 13 und der resultierenden Pulse dargestellt. Das obere Zeitdiagramm zeigt noch einmal die Spannungsrampe als Spannungszeitfunktion. Im mittleren Zeitdiagramm wird das Signal des Prozessors 9, das auf den Schalter 13 wirkt, als Spannungszeitfunktion dargestellt. Im unteren Spannungszeitdiagramm wird die Pulsfolge, die auf den Schalter 2 übertragen wird, dargestellt. Es ist ersichtlich, dass die Pulse nur auf den Schalter 2 durchgeschaltet werden, wenn das Signal des Prozessors 9 auf "high" liegt. Damit wird mit dem Signal des Prozessors 9 die Zeit ausgewählt, wann Hochfrequenzsignale des Oszillators 4 über die Antenne 1 versendet werden.

**Patentansprüche**

1. Radarsensor, wobei der Radarsensor folgende Komponenten aufweist: einen Oszillator (4) zur Erzeugung von Hochfrequenzsignalen, einen Koppler (3), der einen ersten Teil der Hochfrequenzsignale zu einem ersten Schalter (2) in einem Sendepfad des Radarsensors und einen zweiten Teil der Hochfrequenzsignale zu einem zweiten Schalter (5) in einem Empfangspfad koppelt, einen Mischer (6) zur Umsetzung von empfangenen Hochfrequenzsignalen, ein Verzögerungselement (12) zur Erzeugung von verzögerten Pulsen, mit denen der erste und der zweite Schalter (2,5) steuerbar sind, wobei mit dem Verzögerungselement (12) die Pulse zum zweiten Schalter (5) variabel verzögerbar sind und einen Prozessor (9) zur Steuerung des Radarsensors, wobei das Verzögerungselement (12) durch eine Spannungsrampe ansteuerbar ist, **dadurch gekennzeichnet, dass** der Radarsensor zwischen dem Verzögerungselement (12) und dem ersten Schalter (2) einen dritten Schalter (13) aufweist, der mit dem Prozessor (9) verbindbar ist, und dass der Prozessor (9) derart ausgebildet ist, dass der Prozessor (9) den dritten Schalter (13) für die Zeitdauer von einem vorgegebenen Startwert der Spannungsreise bis zu dem Maximalwert der Spannungsrampe schließt.

2. Radarsensor nach Anspruch 1, **dadurch gekennzeichnet, dass** das Verzögerungselement (12) eine Pulsformung mit Logikgattern (20, 23, 36, 39) Widerständen (18, 22, 34, 38) und Kondensatoren (19, 21, 35, 37) aufweist, wobei mittels eines Regelkreises bestehend aus Flip-Flops (27, 28), einem Tiefpass (29, 30, 31), einem Regelverstärker (32) und einem Widerstand (33) eine Stabilisierung und Linearisierung einer Verzögerungskennlinie erfolgt.

3. Radarsensor nach einem der vorhergehenden Ansprüche, **dadurch gekennzeichnet, dass** der Radarsensor mit einer Antenne für den Sendepfad und für den Empfangspfad verbindbar ist.

4. Radarsensor nach einem der Ansprüche 1 oder 2, **dadurch gekennzeichnet, dass** jeweils der Sendepfad und der Empfangspfad mit einer Antenne (1, 7) verbindbar sind.

Fig. 1

EP 1 191 349 A2

Fig. 2

Fig. 4

Fig. 3